# EUROPEAN PATENT SPECIFICATION

(11) **EP 2 228 897 B1**
(45) Date of publication and mention of the grant of the patent: **04.07.2012**
(21) Application number: 09154927.9
(22) Date of filing: 11.03.2009
(51) Int. Cl.: H02P 9/10, H02P 9/48, F03D 9/00, F03B 13/08, H02K 7/18

(54) **Generator power conditioning**
Leistungsaufbereitung eines Generators
Conditionnement d'alimentation de générateur

(43) Date of publication of application: 15.09.2010
(73) Proprietor: Vercet LLC, Carrollton, TX 75006 (US)
(72) Inventor: Pearce, Colin Richard, North Yorkshire, TS9 5QA (GB); Farrelly, Justin Nicholas, Carrollton, Texas 75010 (US)
(74) Representative: Vinsome, Rex Martin

(56) References cited:
- EP-A- 1 103 409
- EP-A1- 1 833 146
- WO-A-2008/119864
- US-A1- 2008 297 088

## Description

### FIELD OF THE INVENTION

The present invention relates to the conditioning of electrical power generated by electricity generating machines, for subsequent collection, connection and transmission, and relates particularly, but not exclusively to off-shore electricity generating apparatus for generating electricity from wind, tidal streams, constant marine currents or wave motion.

### BACKGROUND OF THE INVENTION

Various offshore power generation devices, such as offshore wind turbines, tidal turbines and wave energy converters, have been designed to generate electricity from the kinetic power of the wind, tides, waves and/or ocean currents. Such systems are often deployed as as an array or 'farm' of multiple units arranged to share a common infrastructure. An important advantage of such arrays is that a single or dual export power cable can be used to connect the array of devices to shore, rather than using a separate power export cable for each device. As these cables are expensive, both to buy and install, minimising cable-laying requirements is a significant priority.

However, a common problem associated with these systems is the electrical interconnection of devices in an array for onward transmission of the generated power. To combine the raw generated AC output of each device, these outputs must be in phase, and of the same frequency and voltage. Preferably, the outputs are also of the same frequency as the onshore grid power suppy, to reduce or eliminate expensive additional onshore power processing.

Induction generators (IG) are a type of generator capable of generating AC power. They can also be simple, robust and suited to a rotating central hub type geometry. However, IGs have several disadvantages for implementation in off-shore energy generation. Induction generators are unable to provide 'Fault ride through' for grid compliance and thus require expensive additional back up systems. They typically also dissipate 20 % or more of captured power as heat, lowering efficiency and requiring effective heat dissipation. Induction generators can be expensive to manufacture, due in part to various geometrical constraints related to the close tolerances required both initially and latterly to be maintained in service. Induction generator devices are also not suited to implementation as linear generators or large diameter rim generator geometries due to the large mass of such devices, and the requirement of extremely high tolerances over large distances.

An alternative is to use synchronous generators such as permanent magnet generators (PMG's), which are well suited to linear and rim generator geometries, in addition to hub generator geometries. However, synchronous generators generate variable frequency, variable voltage output power, the voltage and frequency being directly linked to the speed of the incident fluid flow. If adjacent devices are electrically connected they will try to drive each other synchronously, leading to a loss of power captured from the fluid medium due to driving adjacent generators and increased wear and tear in any generators driven as motors rather than generators due to this effect. Consequently, synchronous generators are not generally directly interconnected.

WO2008006614A1 describes a permanent-magnet hydroelectric turbine, in which the output of each coil is rectified by means of a diode bridge or half bridge (i.e. a passive rectifier), and the rectifiers are connected in series and/or parallel to produce a varying DC generator output which can then be interconnected with the varying DC outputs of adjacent generators. A disadvantage of this technology is that it is limited to voltages within the operating range of commercially available bridge rectifiers, typically 1500-3000 V. Insulation requirements impose a further limitation on the maximum output voltage. At these low and medium voltages, power losses in the power export cable become important, effectively limiting the distance over which power can be transmitted (e.g. to shore and/or to other generators) to between a few hundred metres to a few kilometers depending on the voltage level used. A further disadvantage is that, in order to optimally interconnect the variable DC outputs of an array of synchronous generators, the generated power profiles of all the interconnected devices should be nearly identical, otherwise any generators generating less power may not add anything significant to total power output. The reduced power capture occurring when dissimilar DC ouput voltages are joined effectively limit the number of similar synchronous generators that can be interconnected. Yet another disadvantage is that a varying DC output requires relatively complex and expensive inversion equipment onshore to obtain grid compliant AC power.

In the onshore wind turbine industry, asynchronous and synchronous generators are often used with two inverters, one for converting the AC output to fixed voltage DC, and the other for converting the fixed voltage DC to fixed voltage, fixed frequency AC. Typically the generated AC power is at a voltage below 1000V AC to reduce the electrical leakage potential and thus the insulation requirements. This 'low voltage' power can then be stepped up with a standard 3 phase transformer to higher voltage, 11kV, 33kV , 66kV or other grid standard voltage as required for long distance power transmission. In such systems, multiple wind turbines can be interconnected for onward power transmission via a single or dual export power cable, and direct connection to the grid.

However, the inversion technology developed for onshore wind turbines is highly complex, and includes many cut-out switches, safety circuits, and connection boards, and requires high levels of cooling. It is therefore not generally suited to the vibrating (or constantly moving), difficult to cool environment of offshore wind turbines, tidal turbines and wave energy converters, where maintenance is often impossible and always expensive.

Consequently, adapting this technology for offshore wind, wave, tidal or similar devices would require raw AC power from device to be transmitted to a central power processing platform housing the inversion equipment. Such platforms would need to be constructed near the actual generating devices, to avoid transmission losses due to the relatively low generator ouput voltage, and to minimise cabling requirements. This would be very expensive, requiring the construction of either a physical platform or a sub-sea housing or pod rated to survive the highly energetic tidal, wave or simlar regime and to isolate the inversion equipment from excess vibration and turbine related movement. Sub sea pods would have the added difficulties of being suitably pressure rated and leak proof at depth, and would require considerable heat dissipation capability (e.g a 1MW generator with a typical 4% loss would need to dissipate 40kW). Effective heat dissipation would require a large surface area, countering the requirement to keep the pod as small as possible for operational reasons and sealing reasons, or large external cooling fins, which would encourage marine growth, increase drag and make retrieval more difficut. Alternatively, active cooling with water and / or internal circulation air pumps would increase the complexity, cost and potential failure rate of the system. Retreival of such a sub-sea pod for any maintenance, even for fuse changing, would be at significant effort and cost, and may be impossible in certain weather and/or tidal conditions. At present there are no commercially available inverters rated for large scale power conditioning under these conditions.

WO 2008/119864 A1 discloses a generator for a wind turbine, comprising independent windings.

US 2008/0297088 A1 discloses a fuel/electric drive system having an internal combustion engine, and a generator which is driven by the internal combustion engine and has a first stator winding set, a first rectifier which is connected to the first stator winding set at the AC voltage end and to a first DC voltage circuit at the DC voltage end, and a first inverter which is connected to the first DC voltage circuit at the DC voltage end and to a drive motor at the AC voltage end. In order to increase robustness and availability of the fuel/electric drive system, the generator has a second stator winding set, with a second rectfier being connected to the second stator winding set at the AC voltage end and to a second DC voltage circuit at the DC voltage end, and a second inverter being connected to the second DC voltage circuit at the DC voltage end and to the drive motor at the AC voltage end.

EP 1 103 409 A2 discloses a motor/generator provided with plural groups of coils and inverters for supplying a polyphase AC current converted from a DC current to each group of coils in response to pulse width modulation signals output by a microprocessor.

Preferred embodiments of the present invention seek to overcome one or more of the above disadvantages of the prior art.

### SUMMARY OF THE INVENTION

According to an aspect of the present invention, there is provided an electrical generator, comprising:
a first part having a plurality of magnetic field generating elements, said magnetic field generating elements being fixed in position relative to each other; and
a second part having a plurality of groups of windings, said windings being fixed in position relative to each other, each group comprising at least one winding,
wherein said first and second parts are moveable relative to each other, and wherein relative movement between the windings and the magnetic field generating elements induces an electromotive force in each winding;
a plurality of rectifiers for rectifying the electrical power output of at least one winding of a respective group of windings; and
at least one inverter for converting the output of at least one said rectifier to AC;
wherein the generator is adapted to output substantially fixed voltage, fixed frequency AC power;
characterised by:
a plurality of power conditioning units, mounted to a plurality of locations on said second part, wherein each group of windings is connected to at least one respective power conditioning unit, each power conditioning unit comprising at least one said respective rectifier.

By providing a plurality of power conditioning units rather than a single power conditioning unit, the power processed by each power conditioning unit is reduced. Advantageously, this reduces the heat dissipation per power conditioning unit. A further advantage is that, by dividing the power generated into manageable quantities, the power output can be processed using standard power electronics at low voltage. Advantageously, the fixed frequency, fixed voltage, AC output of the generator can be combined with the output of other generators and/or fed directly into the grid system without requiring further processing.

At least one said rectifier may be a respective active rectifier for rectifying the electric power output of at least one winding of a respective group of windings to a substantially constant voltage DC output.

Advantageously, this ensures optimal combination of the outputs from different windings, or from different generators. A further advantage is that the conversion of fixed DC to grid-compliant AC is less complex than the conversion of varying DC to grid-compliant AC.

At least one said power conditioning unit may comprise at least one respective inverter.

Advantageously, providing a respective inverter in at least one said power conditioning unit enables the inversion to be carried out using standard power electronics at low voltage and reduces the required heat dissipation per inverter.

At least one said power conditioning unit may comprise a respective plurality of inverters connected in parallel.

Providing a plurality of inverters in at least one said power conditioning unit improves the fault tolerance of the generator in the event of failure of a single inverter.

At least one said power conditioning unit may be connected to at least one respective inverter.

By providing at least one said inverter externally of the power conditioning unit, the plurality of inverters may advantageously be housed in a common location, for example, to improve access for maintenance. A further advantage is that multiple power conditioning units may connect to the same inverter or inverters.

At least one said power conditioning unit may be connected to a plurality of parallel-connected inverters.

Providing a plurality of inverters in at least one said power conditioning unit improves the fault tolerance of the generator in the event of failure of a single inverter.

Multiple power conditioning units may be connected to at least one said inverter.

Advantageously, the inverters need not be rated at the same capacity as the rectifiers, and can thus be selected according to availability.

At least one said inverter may be adapted to output three-phase AC power.

Advantageously, the output can be directly connected to the grid, and standard components for further processing of the output are readily available.

At least one said inverter may be adapted to receive a reference signal for controlling the phase of the output of at least one respective inverter.

Advantageously, the reference signal can be used to synchronise the outputs of each inverter, thereby enabling the outputs of the inverters to be combined. The reference signal may be used to synchronise the inverter output phases to the grid.

The output of at least one said active rectifier may be less than 1000 V DC.

Working at relatively low voltages provides the advantage that standard power electronics components can be used.

The output of at least one said inverter may be less than 1000 V AC.

Working at relatively low voltages provides the advantage that standard power electronics components can be used.

The electrical generator may further comprise a transformer, for transforming the AC output of at least one said inverter to a higher AC voltage.

Transforming the output to higher AC voltage at the generator itself reduces transmission losses when the power is transmitted to the grid.

At least one said group of windings may comprise at least one respective set of n windings adapted to generate n different phases of electrical power.

Advantageously, this smoothes the torque acting on the generator and the output of each power conditioning unit and/or inverter.

The windings of said set of n windings may be located adjacent to each other.

At least one said group of windings may comprise respective multiple sets of n windings adapted to generate n different phases of electrical power, wherein the corresponding phases of each set are connected in series.

Connecting more than one set of coils in series enables the voltage input to the power conditioning unit and/or the inverters to be selected to match the specifications of standard power electronics components.

At least one said group of windings may comprise at least one respective set of three windings adapted to generate three-phase electrical power.

Advantageously, this enables standard three-phase electronics components to be used.

Said generator may be a linear generator.

Advantageously, the windings of a linear generator are distributed along the length of the generator, enabling the power conditioning units to be similarly distributed along the length of the generator for more efficient heat dissipation.

Said generator may be a rim generator, comprising at least one rotor adapted to be rotatably mounted to a stator.

Advantageously, the windings of a rim generator are distributed circumferentially around the generator, enabling the power conditioning units to be similarly distributed for more efficient heat dissipation.

A plurality of said power conditioning units may be distributed circumferentially around said stator.

A plurality of said magnetic field generating elements may be permanent magnets.

The generator may be adapted to be driven by a flow of water and/or air.

The present invention provides particular advantages for use in offshore or marine applications, since it is costly to provide separate units for processing the power generated by one or more turbines, due to the requirements of heat dissipation, stability against currents, and providing a watertight seal.

At least one said power conditioning unit may be located adjacent a respective group of windings.

Advantageously, distributing the power conditioning units to be adjacent to respective groups of windings improves the dissipation of heat from said power conditioning units.

At least one said inverter may be located on said generator.

Converting the output of each winding to AC at the generator, rather than transmitting DC to a distant site, reduces transmission losses.

The electrical generator may further comprise a shield adapted to reduce penetration of the magnetic flux from the generator into the external environment, wherein a plurality of said power conditioning units are located on the opposite side of said shield from said magnetic field generating elements.

At least one said inverter may be housed in a sealed housing.

According to a further aspect of the present invention, there is provided an array of electrical generators, comprising a plurality of interconnected electrical generators as defined above, adapted to be connected to the public electricity grid.

### BRIEF DESCRIPTION OF THE DRAWINGS

A preferred embodiment of the present invention will now be described, by way of example only and not in any limitative sense, with reference to the accompanying drawings, in which:
Figure 1 illustrates a conventional permanent-magnet rim generator;
Figure 2 illustrates a generator according to a first embodiment of the invention;
Figures 3A and 3B each illustrate a portion of the generator shown in Figure 2;
Figure 4A illustrates a connection schematic for the generator of Figure 2; Figure 4B illustrates a connection schematic for an array of such generators;
Figure 5 illustrates a portion of a generator according to a second embodiment of the invention;
Figures 6A and 6B each illustrate a portion of a generator according to a third embodiment of the invention;
Figure 7 illustrates a connection schematic for an array of generator according to the third embodiment;
Figure 8 illustrates a portion of a generator according to a fourth embodiment of the invention;
Figure 9 illustrates a connection schematic for an array of generators according to a fifth embodiment of the invention;
Figure 10 illustrates a connection schematic for an array of generators according to a sixth embodiment of the invention;
Figure 11 illustrates a further connection schematic for an array of generators according to the invention.

### DETAILED DESCRIPTION OF EMBODIMENTS

The invention will be described with reference to a Rim Permanent Magnet Generator (RPMG). However, the invention is relevant to all wave, ocean current, tidal stream and other offshore electricity generating machinery, and can be applied to other types of generator, in particular linear generators, or generators having a large-diameter central hub.

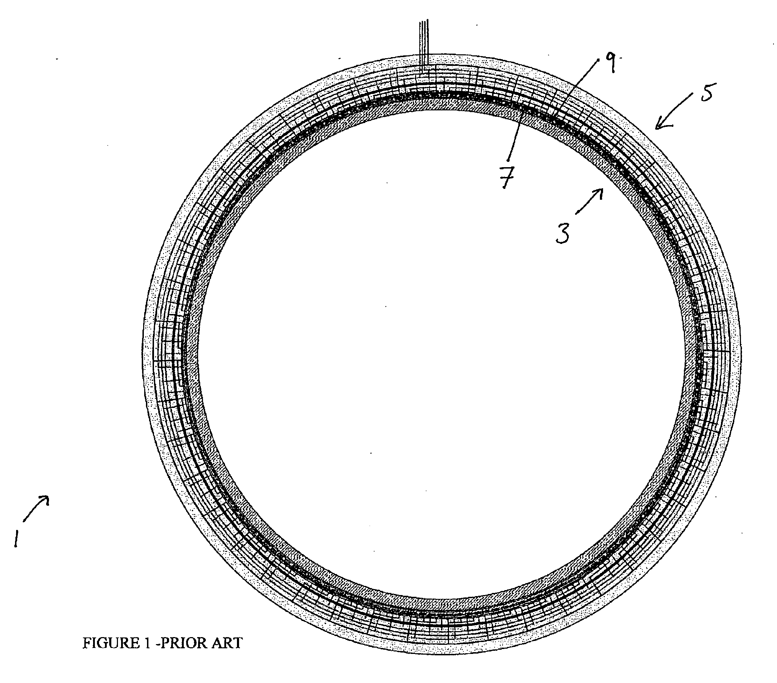

With reference to Figure 1, a RPMG 1 generates electricity directly from the motion between an inner rim 3 and an outer rim 5, one of which includes a number of permanent magnets 7 arranged with poles alternating north then south to provide a varying magnetic flux, and the other of which includes copper coils 9 within a stator section 5. Relative rotation between the two rims 3, 5 induces an alternating Electro Motive Force (EMF) in the coils 9. Movement between the rims 3, 5 is created by the action of water flowing over blades (not shown) attached to a surface of one of the rims 3, 5. The coils 9 and magnets 7 can be arranged in various configurations, in series and/or parallel, to produce an electrical output having the desired characteristics, e.g. 3-phase, 5-phase, 7-phase, N-phase, with varying degrees of redundancy, output voltage level, harmonic distortion characteristic, and other characteristics of the electrical output. It will be appreciated that in all such configurations the voltage and frequency of the output EMF will be directly proportional to the speed of relative rotation of the rims 3, 5. As the rim speed cannot be perfectly controlled, the frequency and voltage of the raw power output will vary.

Figure 1 shows a conventional 3-phase generator 1, configured with N coils 9 and 4N/3 magnets 7 arranged with poles alternating N-S-N-S... circumferentially around the inner rim 3. The N coils 9 have a common neutral 11 and every third coil 9 is interconnected (that is, the output of the 1st, 4th, 7th, ..., and (1+3N)th coils are interconnected, and likewise the outputs of the 2nd, 5th, 8th, ..., and (2+3N)th coils and the 3rd, 6th, 9th, ..., and (3+3N)th coils are respectively interconnected) in a combination of series and parallel arrangements to provide a 3-phase generator output.

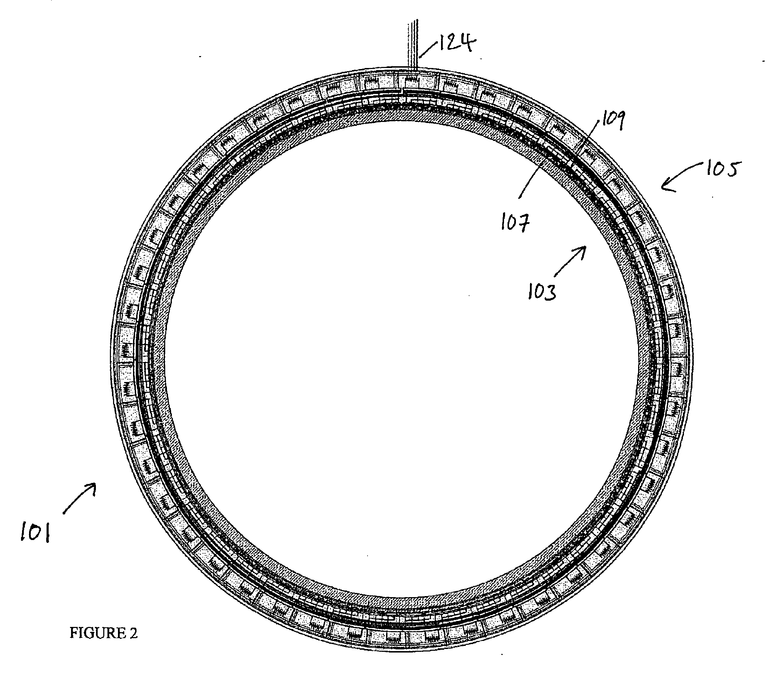

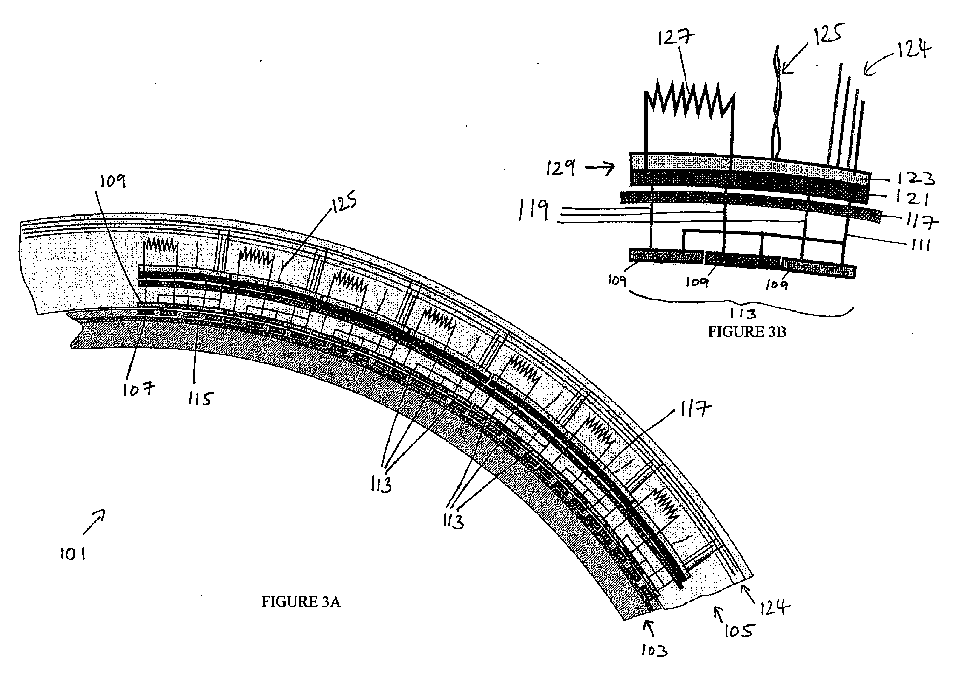

Figure 2 shows a generator 101 according to a first embodiment of the present invention. Figure 3A shows an enlarged section of the turbine 101 shown in Figure 2. A series of coils 109 are arranged on a fixed stator, or outer rim 105. A series of permanent magnets 107 are arranged on a steel flux ring 115 within the rim 103 of a rotor which spins under the influence of passing tide, current or wave motion. The poles of the magnets 107 alternate N-S-N-S... around the circumference of the inner rim 103, to create a varying magnetic flux at each coil 109 when the rotor spins. In each coil 109, the varying magnetic flux induces a varying EMF.

An EMF shield 117 is located radially outward of the coils 19 to prevent leakage of the varying magnetic flux into the external environment.

The ratio of magnets 109 to coils 107 is 4:3, such that each set 113 of three adjacent coils 109 generates three distinct electrical phases, separated by 120 degrees. Other ratios are also possible. In contrast to the conventional generator shown in Figure 1, each set 113 of three coils 109 is wired as a separate three-phase machine, as shown in Figure 3B. In this embodiment the three coils 109 of each set 113 share a common neutral 111. Output leads 119 from each group 113 of three coils 109 pass through or around the EMF shield 117 to an active rectifier 121 which converts the variable frequency, variable voltage AC into fixed voltage DC. An inverter 123 is directly connected to the rectifier 121 to convert the DC output of the rectifier into fixed-frequency, fixed-voltage AC. Each inverter 123 outputs to a common rail three-phase AC bus 124. The rectifier 121 and the inverter 123 are preferably rated for operation within the standard 'low' voltage range of below 1000V. This allows standard power electronic components to be used.

The rectifiers 121 and inverters 123 can be fabricated in solid state fashion and fully embedded within epoxy or similar matrix for installation around the circumference of the stator, adjacent the emf shield. The rectifiers 121 and inverters 123 could be integrated onto a chip, or could be provided by separate IGBTs. By positioning the rectifier 121 and inverter 123 radially outward of the EMF shield 117, the power conditioning electronics are shielded from the varying magnetic flux.

A control lead 125 feeds in a reference signal for phase control and other control signals for operation of the power conditioning electronics. For example, a control signal can be also be used to switch the circuits to 'open circuit' mode, in which no current is drawn from the coil, or to connect the coil outputs to a dump resistor 127 which will act to brake the rotor. The control cable can further be used to remotely control operation of the inverters 123 and to monitor power draw from that phase either separately from other phases or in synchronization with other phases around the turbine.

In the present embodiment, each set 113 of three coils 109 are connected as a single 3-phase machine. This divides the total power generated by the generator 101 into smaller manageable amounts of power, each of which can be rectified and inverted using standard power electronics at low voltage. The generator 101 of the present embodiment includes forty-four sets of three coils 109 (i.e. N=44) and therefore includes forty-four separate power conditioning units 129, each comprising a rectifier 121 and an inverter 123. However, it will be appreciated that the person skilled in the art would select N according to the desired generator specifications.

With each power conditioning unit 129 only handling a small amount of power (1/Nth of the total power), the heat dissipation per unit will be correspondigly lowered, (typically <1kW). The power conditioning units 129 are distributed around the outer rim 105, close to the outer surface of the generator 101, such that heat is efficiently dissipated over a large surface area into the ambient water stream for effective heat dissipation.

Manufacturing each power conditioning unit 129 as an integrated solid state device, fully embedded and sealed within epoxy or a similar matrix, results in a system which is relatively robust against physical shocks or vibration, and less susceptible to leaks.

Furthermore, by generating and processing power in N separate units, the generator 101 is highly fault tolerant. Should any individual 3-phase unit fail (due to failure within a single coil, rectifier or inverter), the faulty unit can be isolated from the remaining units and the turbine can continue to operate. The person skilled in the art will appreciate that the degree of fault tolerance can be engineered to meet various specifications (e.g. by increasing N). The capability to function at reduced capacity whilst carrying a fault significantly increases the mean time to maintenance, as compared with conventional generators. This is a significant advantage, as maintenance of off-shore machines is costly and can depend on the ambient conditions and availability of suitable vessels.

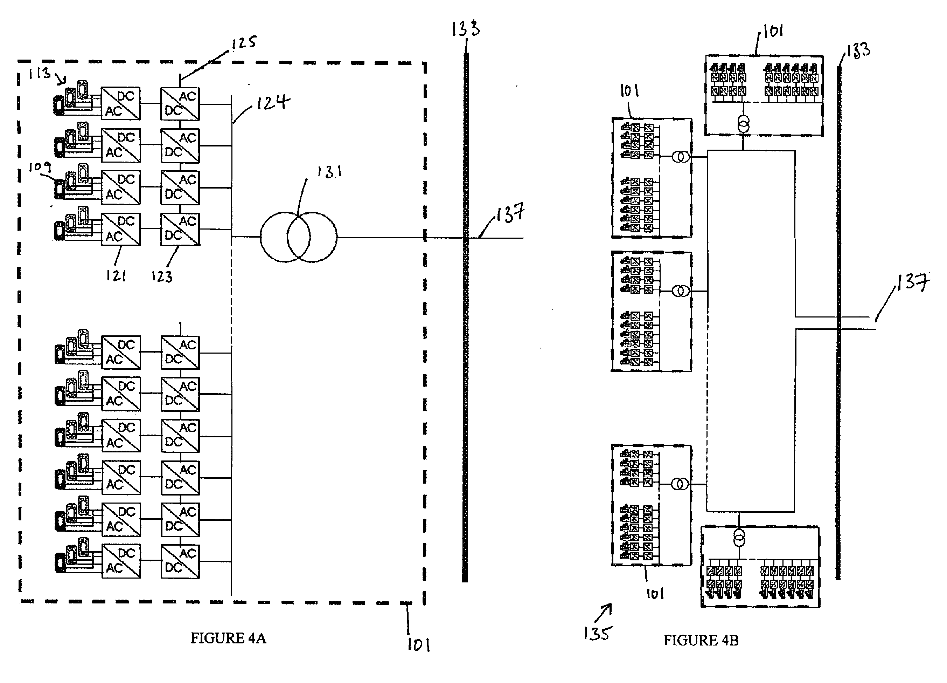

Figure 4A shows a schematic of a generator 101 according the first embodiment described above, further comprising a transformer 131 for transforming the fixed frequency, fixed voltage 3-phase AC output of the inverters 123 to a higher voltage (typically 11kV, 33kV or 66kV) suitable for long-distance power transmission, or for connection to the grid. Preferably, the 3-phase output voltage of the generator 101 is phase matched to a 3-phase reference signal from the grid. The high voltage power may be transmitted directly to shore 133 for connection to the grid. Alternatively, an array 135 or 'farm' of generators 101 may be connected together as shown in Figure 4B for connection back to shore 133 and grid via a single export cable 137. A dual export cable may be provided for redundancy.

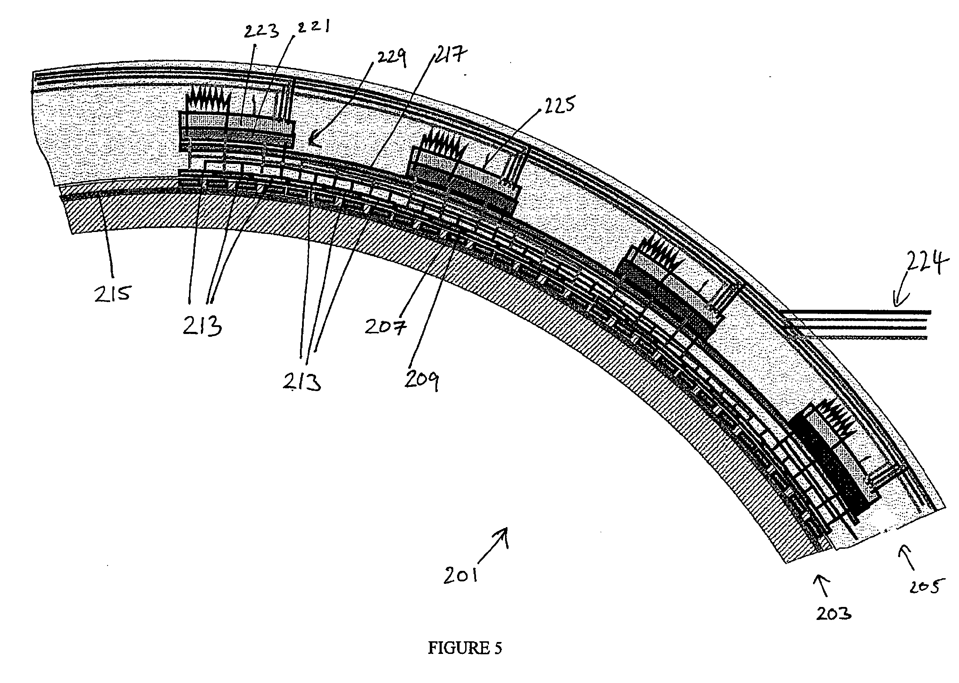

Figure 5 shows a generator 201 according to a second embodiment of the invention. As in the first embodiment described above, permanent magnets 207 are arranged on a flux ring 215 on an inner rim 203, and coils 209 are provided on an outer rim 205. The generator 201 also includes a plurality of power conditioning units 229, each comprising a combined back-to-back rectifier 221 and inverter 223, located radially outward of an emf shield 217. However, in the second embodiment, each power conditioning unit 229 conditions the power output from two adjacent 3-phase coil sets 213. As in the first embodiment, the inverters 223 output to a common rail 3-phase AC bus 224. The second embodiment could be modified such that each power conditioning unit 229 conditions the power output from a plurality of X>2 3-phase sets 213 of coils 209.

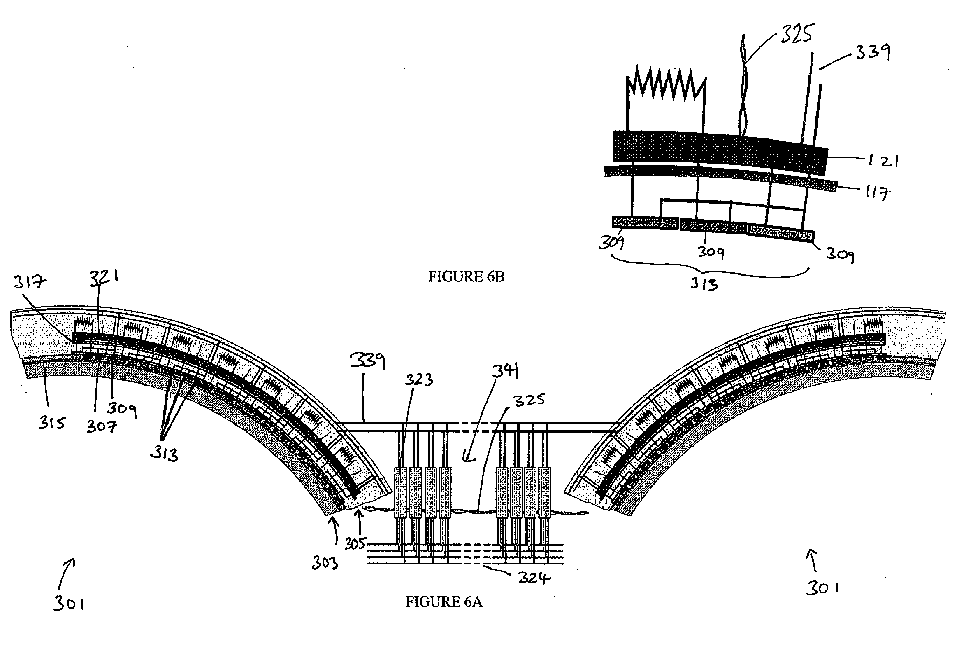

Figure 6 shows a generator 301 according to a third embodiment of the invention. As in the first embodiment described above, permanent magnets 307 are arranged on a flux ring 315 on an inner rim 303, and coils 309 are provided on an outer rim 305. Also, as in the first embodiment, individual active rectifiers 321 are connected to respective 3-phase sets 313 of coils 309, and are located on the outer rim section 305 close to each 3-coil phase set 313. However, the fixed DC output from each rectifier 321 is carried on a single bus 339 to a bank 341 of inverters 323. The bank 329 of inverters 323 output to a common rail 3-phase AC bus 324. Control signals may be input via a control cable 325 to the inverters for controlling the phase of the AC output.

Since a one-to-one correspondence between the rectifiers 321 and inverters 323 is not necessary, the inverters 323 do not need to be rated at same capacity as the rectifiers 321. This design flexibility enables the components to be specified according to those of widely available components. The bank 341 of inverters 323 may have a total capacity greater than the maximum rated output capacity of the rectifiers 321, thereby allowing for failure of one or more of the inverters 323 to be tolerated. This further improves the fault tolerance of the machine 301.

The bank 341 of inverters 323 may be housed in a central, easy-to-access position, for example on the generator itself, or in a chamber above or near to the generator. The inverters 323 could be individually sealed, and cooled as required. Alternatively, the bank 341 of inverters 323 could be housed in a single pod, although this may then require additional cooling.

In Figure 6, two turbines 301 of a twin turbine configuration are connected to the same bank 341 of inverters 323, which may be located in a central position between the twin turbines. However, each turbine 301 may be served by a separate bank 341 of inverters 323.

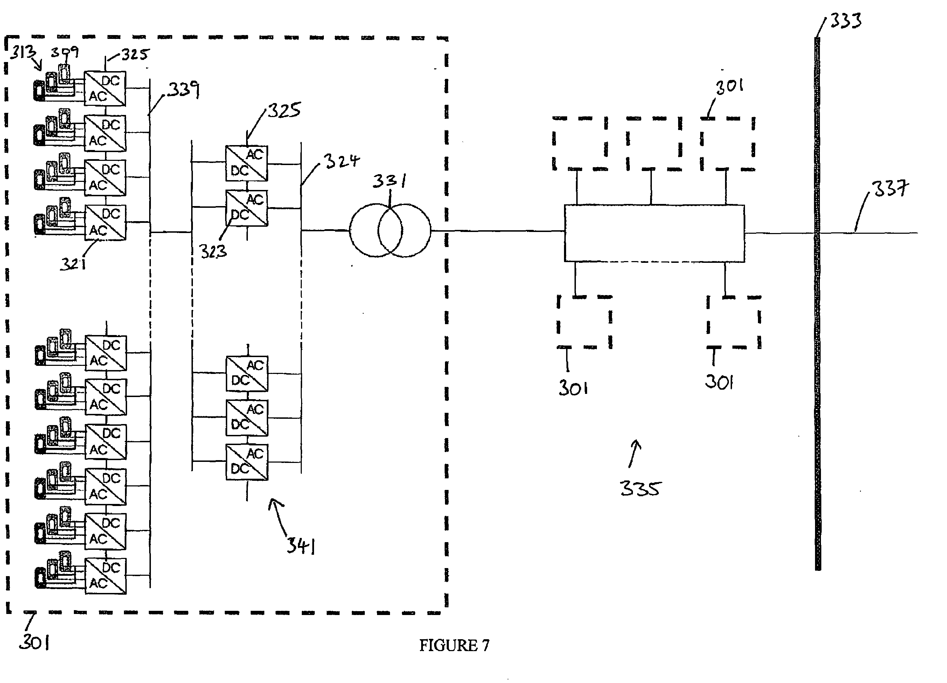

Figure 7 shows a schematic of a generator 301 according the third embodiment described above, further comprising a transformer 331 for transforming the fixed frequency, fixed voltage 3-phase AC output of the inverters 323 to a higher voltage, and connected with an array 335 of similar generators 301 for connection back to shore 333 and grid via export cable 337.

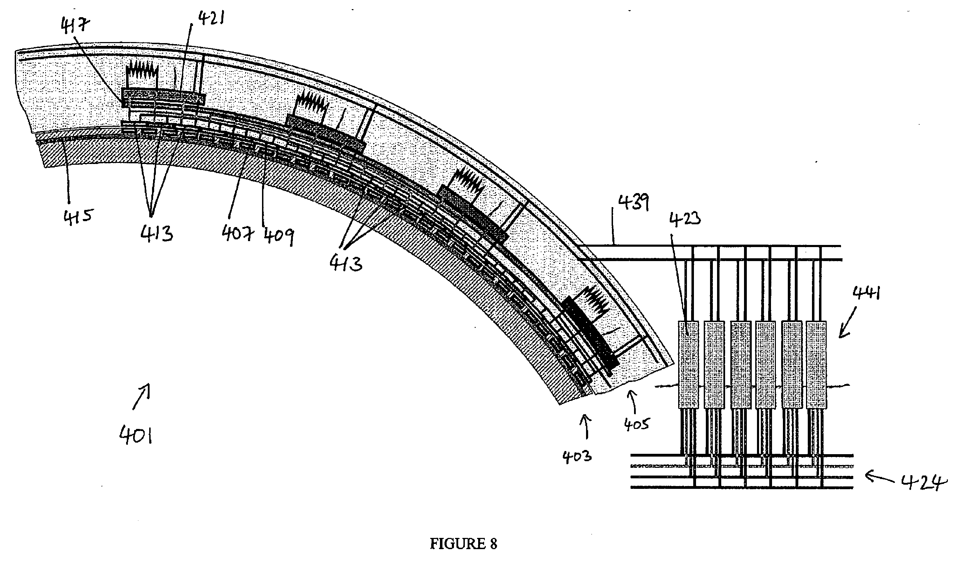

Figure 8 shows a generator 401 according to a fourth embodiment of the invention. As in the third embodiment described above, permanent magnets 407 are arranged on a flux ring 415 on an inner rim 403, and coils 409 are provided on an outer rim 405. The generator 401 also includes a plurality of active rectifiers 421, located radially outward of an emf shield 417, with the DC output of the each rectifier 421 connected via a common bus 439 to a centrally located bank 441 of inverters 423, which output to a common rail 3-phase AC bus 424. The fourth embodiment differs from the third embodiment in that each rectifier 421 rectifies the output from two adjacent 3-phase coil sets 413. Alternatively, each rectifier 421 may rectify the output from a plurality of X>2 sets 413 of coils 409.

In the above-described embodiments, three distinct electrical phases are generated, each at an angle of 120 degrees from the other. By generating three phases, or indeed any number of additional phases (polyphasic), a reasonably balanced output is obtained and standard, off-the-shelf power electronics and other components can be used.

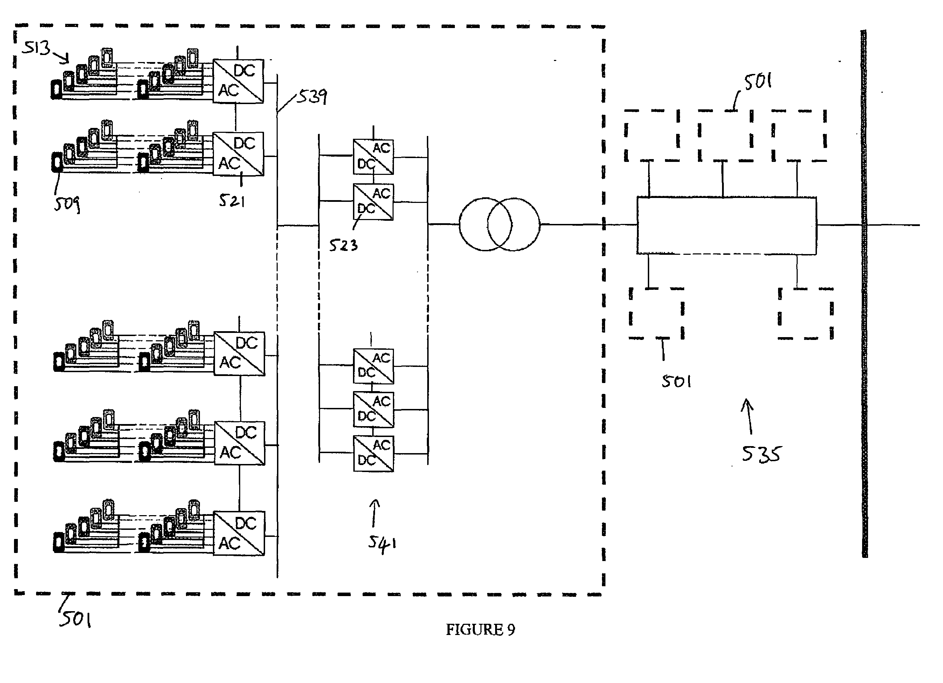

However, it will be appreciated that other configurations are possible, including grouping the coils in five-phase sets of coils as shown in Figure 9. Figure 9 shows a schematic of a generator 501 according to a fifth embodiment, connected to an array 535 of other similar generators 501. Here, each set 513 of coils 509 comprises five coils 509 generating five different phases of AC output. The generator could alternatively be configured with sets of coils comprising 3, 5, 7 ... coils, for generating 3-, 5-, 7- ... phase power.

Other than the difference in the number of phases generated, the fifth embodiment is similar to the second and fourth embodiments, as individual rectifiers 521 rectify the output from two or more adjacent sets 513 of coils 509, and the fixed DC output of the rectifiers is carried on a single bus 539 to a bank 541 of inverters 523. Although multiple sets 513 of coils 509 are shown connected in parallel to each rectifier 521, such sets 513 of coils 509 could alternatively be connected in series in order to increase the output voltage.

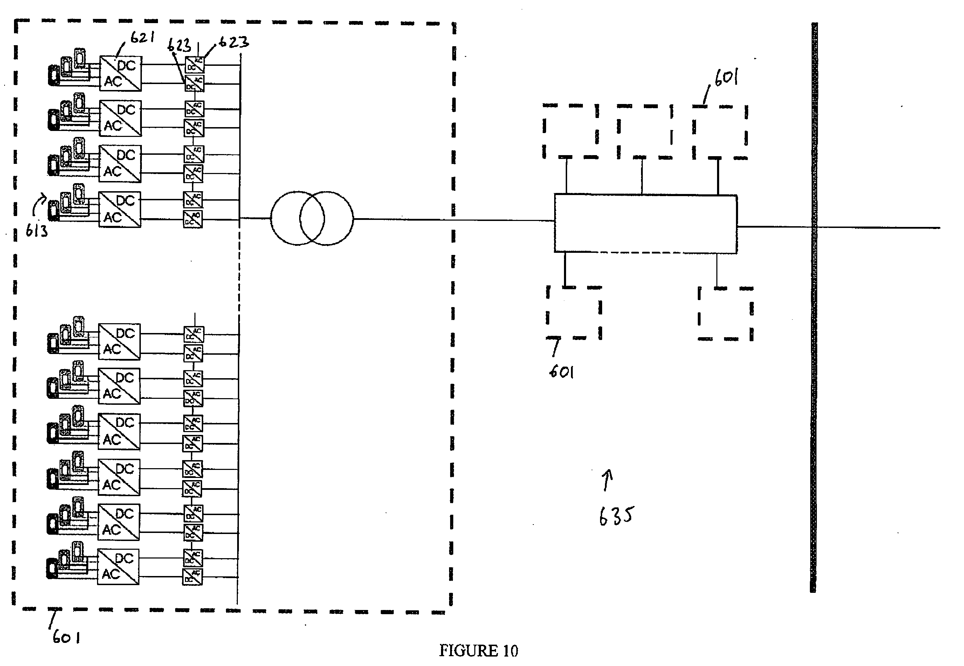

Figure 10 shows a schematic of a generator 601 according to a sixth embodiment, connected to an array 635 of other similar generators 601. This embodiment is similar to the first embodiment, with the power generated by each set 613 of three coils 609 being processed by a power conditioning unit, located adjacent the respective coil set 613. However, each power conditioning unit 613 includes a rectifier 621 connected to two inverters 623. This embodiment thereby incorporates further redundancy or fault tolerance at the inversion stage as compared to the first embodiment described above. The fault tolerance could be increased further by increasing the number of inverters 623 connected to each rectifier 621. As a further alternative, the number of rectifiers 621 could be increased, such that each coil set 613 fed a plurality of rectifiers 621, the combined output of which fed one or more adjacent inverters 623.

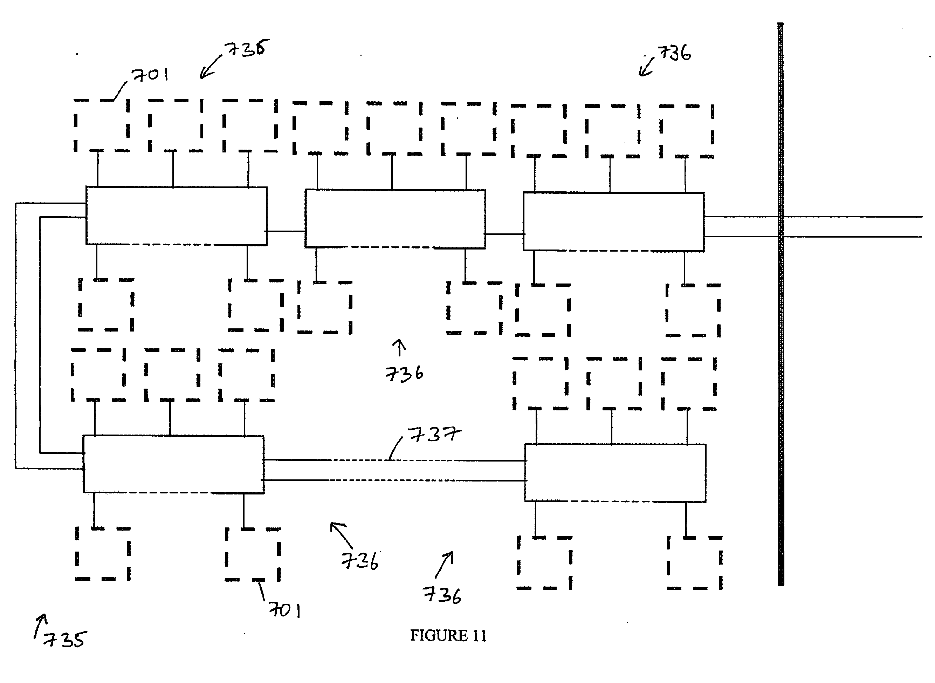

Figure 11 illustrates a further connection schematic for connecting the outputs of generators 701 according to any of the embodiments described above in an array 735. The array 735 of generators 701 is divided in to subarrays 736, the generators 701 of each sub-array 736 being connected together, and each sub-array 736 being connected to the next via a single or dual export cable 737.

Although the invention has been described with respect to a permanent-magnet rim generator, the invention is applicable to other types of generator. In particular, the skilled person will appreciate that the configurations of coils and power conditioning electronics, distributed circumferentially in the rim generator design described above, could instead be distributed linearly in a linear generator design. The present invention could also be applied to generators of the central hub type, having a large diameter hub, such that the configurations of coils and power conditioning electronics described above could be distributed around the hub. Similarly, the magnetic field may be generated by means other than permanent magnets.

It will be appreciated by persons skilled in the art that the above embodiments have been described by way of example only, and not in any limitative sense, and that various alterations and modifications are possible without departure from the scope of the invention as defined by the appended claims.

## Claims

1. An electrical generator (101, 201, 301, 401, 501, 601), comprising
a first part (103, 203, 303, 403) having a plurality of magnetic field generating elements (107, 207, 307, 407), said magnetic field generating elements (107, 207, 307, 407) being fixed in position relative to each other; and
a second part (105, 205, 305, 405) having a plurality of groups of windings (109, 209, 309, 409, 509, 609), said windings (109, 209, 309, 409, 509, 609) being fixed in position relative to each other, each group comprising at least one winding (109, 209, 309, 409, 509, 609),
wherein said first and second parts (103, 203, 303, 403; 105, 205, 305, 405) are moveable relative to each other, and wherein relative movement between the windings (109, 209, 309, 409, 509, 609) and the magnetic field generating elements (107, 207, 307, 407) induces an electromotive force in each winding (109, 209, 309, 409, 509, 609);
a plurality of rectifiers (121, 221, 321, 421, 521, 621) for rectifying the electrical power output of at least one winding (109, 209, 309, 409, 509, 609) of a respective group of windings; and
at least one inverter (123, 223, 323, 423, 523, 623) for converting the output of at least one said rectifier (121, 221, 321, 421, 521, 621) to AC;
wherein the generator (101, 201, 301, 401, 501, 601) is adapted to output substantially fixed voltage, fixed frequency AC power;
**characterised by**:
a plurality of power conditioning units (129, 229, 329, 429), mounted to a plurality of locations on said second part (105, 205, 305, 405), wherein each group of windings is connected to at least one respective power conditioning unit (129, 229, 329, 429, 529, 629), each power conditioning unit (129, 229, 329, 429, 529, 629) comprising at least one said respective rectifier (121, 221, 321, 421, 521, 621).

2. An electrical generator (101, 201, 601) according to claim 1, wherein at least one said power conditioning unit (129, 229, 629) comprises at least one respective inverter (123, 223, 623).

3. An electrical generator (101, 201, 301, 401, 501, 601) according to claim 1 or claim 2, wherein at least one said power conditioning unit (129, 229, 329, 429, 529, 629) is housed in a respective sealed housing or is sealed by being embedded in a material.

4. An electrical generator (101, 201, 301, 401, 501, 601) according to any of the preceding claims, wherein at least one said power conditioning unit (129, 229, 329, 429) is located adjacent a respective group of windings (109, 209, 309, 409, 509, 609).

5. An electrical generator (101, 201, 301, 401, 501, 601) according to any of the preceding claims, wherein the generator (101, 201, 301, 401, 501, 601) is adapted to be driven by a flow of water.

6. An electrical generator (101, 201, 301, 401, 501, 601) according to any of the preceding claims, including one or more of the following features:
(i) wherein at least one said rectifier (121, 221, 321, 421, 521, 621) is a respective active rectifier (121, 221, 321, 421, 521, 621) for rectifying the electric power output of at least one winding (109, 209, 309, 409, 509, 609) of a respective group of windings to a substantially constant voltage DC output;
(ii) wherein at least one said power conditioning unit (629) comprises a respective plurality of inverters (623) connected in parallel;
(iii) wherein at least one said power conditioning unit (329, 429, 529) is connected to at least one respective inverter (323, 423, 523);
(iv) wherein at least one said rectifier (321, 421, 521, 621) is connected to a respective plurality of parallel-connected inverters (323, 423, 523, 623);
(v) wherein multiple rectifiers (321, 421, 521) are connected to at least one said inverter (323, 423, 523);
(vi) wherein at least one said inverter (123, 223, 323, 423, 523, 623) is adapted to output three-phase AC power;
(vii) wherein at least one said inverter (123, 223, 323, 423, 523, 623) is adapted to receive a reference signal for controlling the phase of the output of at least one said respective inverter (123, 223, 323, 423, 523, 623);
(viii) wherein the output of at least one said rectifier (121, 221, 321, 421, 521, 621) is less than 1000 V DC;
(ix) wherein the output of at least one said inverter (123, 223, 323, 423, 523, 623) is less than 1000 V AC;
(x) further comprising a transformer (131, 331), for transforming the AC output of at least one said inverter (123, 323) to a higher AC voltage;
(xi) wherein a plurality of said magnetic field generating elements (107, 207, 307, 407) are permanent magnets (107, 207, 307, 407);
(xii) wherein the generator is adapted to be driven by a flow of air;
(xiv) further comprising a shield (115, 215, 315, 415) adapted to reduce penetration of the magnetic flux from the generator (101, 201, 301, 401) into the external environment, wherein a plurality of power conditioning units (129, 229, 329, 429) are located on the opposite side of said shield (115, 215, 315, 415) from said magnetic field generating elements (107, 207, 307, 407); or
(xv) wherein at least one said inverter (323, 423) is housed in a sealed housing.

7. An electrical generator (101, 201, 301, 401, 501, 601) according to any one of the preceding claims, wherein at least one said group of windings (109, 209, 309, 409, 509, 609) comprises at least one respective set (113, 213, 313) of n windings (109, 209, 309, 409, 509, 609) adapted to generate n different phases of electrical power.

8. An electrical generator (101, 201, 301, 401) according to claim 7, wherein the windings (109, 209, 309, 409) of said set (113, 213, 313, 413) of n windings are located adjacent to each other.

9. An electrical generator (501) according to claim 7 or 8, wherein at least one said group of windings (509) comprises respective multiple sets (513) of n windings adapted to generate n different phases of electrical power, wherein the corresponding phases of each set (513) are connected in series.

10. An electrical generator (101, 201, 301, 401, 501, 601) according to claim 7 or claim 9, wherein at least one said group of windings (109, 209, 309, 409, 509, 609) comprises at least one respective set (113, 213, 313, 413, 513, 613) of three windings (109, 209, 309, 409, 509, 609) adapted to generate three-phase electrical power.

11. An electrical generator according to any one of the preceding claims, wherein said generator is a linear generator.

12. An electrical generator (101, 201, 301, 401) according to any one of claims 1 to 10, wherein said generator (101, 201, 301, 401) is a rim generator (101, 201, 301, 401), comprising at least one rotor (103, 203, 303, 403) adapted to be rotatably mounted to a stator (105, 205, 305, 405).

13. An electrical generator (101, 201, 301, 401) according to claim 12, wherein a plurality of said power conditioning units (129, 229, 329, 429) is distributed circumferentially around said stator (105, 205, 305, 405).

14. An array (135, 335, 535, 635, 735) of electrical generators, comprising a plurality of interconnected electrical generators (101, 301, 501, 601, 701) according to any one of the preceding claims, adapted to be connected to the public electricity grid.

## Patentansprüche

1. Elektrischer Generator (101, 201, 301, 401, 501, 601), umfassend:
ein erstes Teil (103, 203, 303, 403) mit einer Vielzahl von magnetfelderzeugenden Elementen (107, 207, 307, 407), wobei die genannten magnetfelderzeugenden Elemente (107, 207, 307, 407) in Solllage relativ zueinander fixiert sind, und
ein zweites Teil (105, 205, 305, 405) mit einer Vielzahl von Gruppen von Wicklungen (109, 209, 309, 409, 509, 609), wobei die genannten Wicklungen (109, 209, 309, 409, 509, 609) in Solllage relativ zueinander fixiert sind, wobei jede Gruppe wenigstens eine Wicklung (109, 209, 309, 409, 509, 609) umfasst,
wobei das genannte erste und zweite Teil (103, 203, 303, 403; 105, 205, 305, 405) relativ zueinander bewegbar sind und wobei eine relative Bewegung zwischen den Wicklungen (109, 209, 309, 409, 509, 609) und den magnetfelderzeugenden Elementen (107, 207, 307, 407) in jeder Wicklung (109, 209, 309, 409, 509, 609) eine elektromotorische Kraft induziert,
eine Vielzahl von Stromrichtern (121, 221, 321, 421, 521, 621) zum Gleichrichten der elektrischen Leistungsabgabe wenigstens einer Wicklung (109, 209, 309, 409, 509, 609) einer jeweiligen Gruppe von Wicklungen, und
wenigstens einen Wechselrichter (123, 223, 323, 423, 523, 623) zum Umwandeln der Ausgabe von wenigstens einem der genannten Stromrichter (121, 221, 321, 421, 521, 621) in Wechselstrom,
wobei der Generator (101, 201, 301, 401, 501, 601) zur Ausgabe von Wechselstrom mit im Wesentlichen festgelegter Spannung und festgelegter Frequenz ausgeführt ist,
**gekennzeichnet durch**:
eine Vielzahl von Leistungsaufbereitungseinheiten (129, 229, 329, 429), die an einer Vielzahl von Positionen an dem genannten zweiten Teil (105, 205, 305, 405) angebracht sind, wobei jede Wicklungsgruppe mit wenigstens einer jeweiligen Leistungsaufbereitungseinheit (129, 229, 329, 429, 529, 629) verbunden ist, wobei jede Leistungsaufbereitungseinheit (129, 229, 329, 429, 529, 629) wenigstens einen genannten jeweiligen Stromrichter (121, 221, 321, 421, 521, 621) umfasst.

2. Elektrischer Generator (101, 201, 601) nach Anspruch 1, wobei wenigstens eine genannte Leistungsaufbereitungseinheit (129, 229, 629) wenigstens einen jeweiligen Wechselrichter (123, 223, 623) umfasst.

3. Elektrischer Generator (101, 201, 301, 401, 501, 601) nach Anspruch 1 oder Anspruch 2, wobei wenigstens eine genannte Leistungsaufbereitungseinheit (129, 229, 329, 429, 529, 629) in einem jeweiligen dicht verschlossenen Gehäuse aufgenommen ist oder durch Einbetten in einem Material gekapselt ist.

4. Elektrischer Generator (101, 201, 301, 401, 501, 601) nach einem der vorhergehenden Ansprüche, wobei wenigstens eine genannte Leistungsaufbereitungseinheit (129, 229, 329, 429) angrenzend an eine jeweilige Gruppe von Wicklungen (109, 209, 309, 409, 509, 609) positioniert ist.

5. Elektrischer Generator (101, 201, 301, 401, 501, 601) nach einem der vorhergehenden Ansprüche, wobei der Generator (101, 201, 301, 401, 501, 601) ausgeführt ist, um von einem Wasserstrom angetrieben zu werden.

6. Elektrischer Generator (101, 201, 301, 401, 501, 601) nach einem der vorhergehenden Ansprüche, der eines oder mehrere der folgenden Merkmale aufweist:
i) wobei wenigstens ein genannter Stromrichter (121, 221, 321, 421, 521, 621) ein jeweiliger aktiver Stromrichter (121, 221, 321, 421, 521, 621) zum Gleichrichten der elektrischen Leistungsabgabe von wenigstens einer Wicklung (109, 209, 309, 409, 509, 609) einer jeweiligen Wicklungsgruppe auf eine Gleichstromausgabe mit im Wesentlichen konstanter Spannung ist,
ii) wobei wenigstens eine genannte Leistungsaufbereitungseinheit (629) eine jeweilige Vielzahl von parallel geschalteten Wechselrichtern (623) umfasst,
iii) wobei wenigstens eine genannte Leistungsaufbereitungseinheit (329, 429, 529) mit wenigstens einem jeweiligen Wechselrichter (323, 423, 523) verbunden ist,
iv) wobei wenigstens ein genannter Stromrichter (321, 421, 521, 621) mit einer jeweiligen Vielzahl von parallel geschalteten Wechselrichtern (323, 423, 523, 623) verbunden ist,
v) wobei mehrere Stromrichter (321, 421, 521) mit wenigstens einem der genannten Wechselrichter (323, 423, 523) verbunden sind,
vi) wobei wenigstens ein genannter Wechselrichter (123, 223, 323, 423, 523, 623) zum Ausgeben eines dreiphasigen Wechselstroms ausgeführt ist,
vii) wobei wenigstens ein genannter Wechselrichter (123, 223, 323, 423, 523, 623) zum Empfangen eines Bezugssignals zum Regeln der Phase der Ausgabe wenigstens eines der genannten jeweiligen Wechselrichter (123, 223, 323, 423, 523, 623) ausgeführt ist,
viii) wobei die Ausgabe von wenigstens einem genannten Stromrichter (121, 221, 321, 421, 521, 621) kleiner als 1000 V Gleichstrom ist,
ix) wobei die Ausgabe von wenigstens einem genannten Wechselrichter (123, 223, 323, 423, 523, 623) kleiner als 1000 V Wechselstrom ist,
x) ferner umfassend einen Transformator (131, 331) zum Umwandeln der Wechselstromausgabe von wenigstens einem der genannten Wechselrichter (123, 323) in eine höhere Wechselspannung,
xi) wobei eine Vielzahl der genannten magnetfelderzeugenden Elemente (107, 207, 307, 407) Dauermagneten (107, 207, 307, 407) sind,
xii) wobei der Generator ausgeführt ist, um von einem Luftstrom angetrieben zu werden,
xiv) ferner umfassend einen Schirm (115, 215, 315, 415) zum Verringern des Eindringens des magnetischen Flusses aus dem Generator (101, 201, 301, 401) in die äußere Umgebung, wobei sich eine Vielzahl von Leistungsaufbereitungseinheiten (129, 229, 329, 429) auf der den genannten magnetfelderzeugenden Elementen (107, 207, 307, 407) entgegengesetzten Seite des genannten Schirms (115, 215, 315, 415) befindet, oder
xv) wobei wenigstens ein genannter Wechselrichter (323, 423) in einem dicht verschlossenen Gehäuse aufgenommen ist.

7. Elektrischer Generator (101, 201, 301, 401, 501, 601) nach einem der vorhergehenden Ansprüche, wobei wenigstens eine der genannten Gruppen von Wicklungen (109, 209, 309, 409, 509, 609) wenigstens einen jeweiligen Satz (113, 213, 313) von n Wicklungen (109, 209, 309, 409, 509, 609) zum Erzeugen von n verschiedenen Phasen elektrischer Leistung aufweist.

8. Elektrischer Generator (101, 201, 301, 401) nach Anspruch 7, wobei die Wicklungen (109, 209, 309, 409) des genannten Satzes (113, 213, 313, 413) von n Wicklungen nebeneinander angeordnet sind.

9. Elektrischer Generator (501) nach Anspruch 7 oder Anspruch 8, wobei wenigstens eine genannte Gruppe von Wicklungen (509) jeweilige mehrere Sätze (513) von n Wicklungen zum Erzeugen von n verschiedenen Phasen elektrischer Leistung aufweist, wobei die entsprechenden Phasen jedes Satzes (513) miteinander in Reihe geschaltet sind.

10. Elektrischer Generator (101, 201, 301, 401, 501, 601) nach Anspruch 7 oder Anspruch 9, wobei wenigstens eine der genannten Gruppen von Wicklungen (109, 209, 309, 409, 509, 609) wenigstens einen jeweiligen Satz (113, 213, 313, 413, 513, 613) von drei Wicklungen (109, 209, 309, 409, 509, 609) zum Erzeugen von dreiphasiger elektrischer Leistung aufweist.

11. Elektrischer Generator nach einem der vorhergehenden Ansprüche, wobei der genannte Generator ein linearer Generator ist.

12. Elektrischer Generator (101, 201, 301, 401) nach einem der Ansprüche 1 bis 10, wobei der genannte Generator (101, 201, 301, 401) ein Rand-Generator (101, 201, 301, 401) ist, der wenigstens einen Läufer (103, 203, 303, 403) aufweist, der zum drehbaren Montieren an einem Ständer (105, 205, 305, 405) ausgeführt ist.

13. Elektrischer Generator (101, 201, 301, 401) nach Anspruch 12, wobei eine Vielzahl der genannten Leistungsaufbereitungseinheiten (129, 229, 329, 429) am Umfang um den genannten Ständer (105, 205, 305, 405) verteilt ist.

14. Anordnung (135, 335, 535, 635, 735) elektrischer Generatoren, die eine Vielzahl von zusammengeschalteten elektrischen Generatoren (101, 301, 501, 601, 701) nach einem der vorhergehenden Ansprüche aufweist, die ausgeführt sind, um mit dem öffentlichen Elektrizitätsnetz verbunden zu werden.

## Revendications

1. Générateur électrique (101, 201, 301, 401, 501, 601), comprenant
une première partie (103, 203, 303, 403) possédant une pluralité d'éléments générateurs de champ magnétique (107, 207, 307, 407), lesdits éléments générateurs de champ magnétique (107, 207, 307, 407) étant fixés en position les uns par rapport aux autres, et
une deuxième partie (105, 205, 305, 405) possédant une pluralité de groupes d'enroulements (109, 209, 309, 409, 509, 609), lesdits enroulements (109, 209, 309, 409, 509, 609) étant fixés en position les uns par rapport aux autres, chaque groupe comprenant au moins un enroulement (109, 209, 309, 409, 509, 609),
où lesdites première et deuxième parties (103, 203, 303, 403 ; 105, 205, 305, 405) sont déplaçables l'une par rapport à l'autre, et où le déplacement relatif entre les enroulements (109, 209, 309, 409, 509, 609) et les éléments générateurs de champ magnétique (107, 207, 307, 407) induit une force électromotrice dans chaque enroulement (109, 209, 309, 409, 509, 609),
une pluralité de redresseurs (121, 221, 321, 421, 521, 621) destinés à redresser la sortie de courant électrique d'au moins un enroulement (109, 209, 309, 409, 509, 609) d'un groupe respectif d'enroulements, et
au moins un onduleur (123, 223, 323, 423, 523, 623) destiné à convertir la sortie d'au moins un desdits redresseurs (121, 221, 321, 421, 521, 621) vers c.a.,
où le générateur (101, 201, 301, 401, 501, 601) est adapté de façon à produire un courant c.a. d'une fréquence sensiblement fixe et d'une tension sensiblement fixe,
**caractérisé par** :
une pluralité d'unités de conditionnement de courant électrique (129, 229, 329, 429), montées sur une pluralité d'emplacements sur ladite deuxième partie (105, 205, 305, 405), où chaque groupe d'enroulements est raccordé à au moins une unité de conditionnement de courant électrique respective (129, 229, 329, 429, 529, 629), chaque unité de conditionnement de courant électrique respective (129, 229, 329, 429, 529, 629) comprenant au moins un desdits redresseurs respectifs (121, 221, 321, 421, 521, 621).

2. Générateur électrique (101, 201, 601) selon la Revendication 1, où au moins une desdites unités de conditionnement de courant électrique (129, 229, 629) comprend au moins un onduleur respectif (123, 223, 623).

3. Générateur électrique (101, 201, 301, 401, 501, 601) selon la Revendication 1 ou 2, où au moins une desdites unités de conditionnement de courant électrique (129, 229, 329, 429, 529, 629) est logée dans un boîtier étanche respectif ou est scellée en étant imbriquée dans un matériau.

4. Générateur électrique (101, 201, 301, 401, 501, 601) selon l'une quelconque des Revendications précédentes, où au moins une desdites unités de conditionnement de courant électrique (129, 229, 329, 429) est située de manière adjacente à un groupe d'enroulements respectif (109, 209, 309, 409, 509, 609).

5. Générateur électrique (101, 201, 301, 401, 501, 601) selon l'une quelconque des Revendications précédentes, où le générateur (101, 201, 301, 401, 501, 601) est adapté de façon à être entraîné par un écoulement d'eau.

6. Générateur électrique (101, 201, 301, 401, 501, 601) selon l'une quelconque des Revendications précédentes, comprenant une ou plusieurs des caractéristiques suivantes :
(i) où au moins un desdits redresseurs (121, 221, 321, 421, 521, 621) est un redresseur actif respectif (121, 221, 321, 421, 521, 621) destiné à redresser la sortie de courant électrique d'au moins un enroulement (109, 209, 309, 409, 509, 609) d'un groupe respectif d'enroulements vers une sortie c.c. à tension sensiblement constante,
(ii) où au moins une desdites unités de conditionnement de courant électrique (629) comprend une pluralité respective d'onduleurs (623) raccordés en parallèle,
(iii) où au moins une desdites unités de conditionnement de courant électrique (329, 429, 529) est raccordée à au moins un onduleur respectif (323, 423, 523),
(iv) où au moins un desdits redresseurs (321, 421, 521, 621) est raccordé à une pluralité respective d'onduleurs raccordés en parallèle (323, 423, 523, 623),
(v) où plusieurs redresseurs (321, 421, 521) sont raccordés à au moins un desdits onduleurs (323, 423, 523),
(vi) où au moins un desdits onduleurs (123, 223, 323, 423, 523, 623) est adapté de façon à produire un courant électrique c.a. triphasé,
(vii) où au moins un desdits onduleurs (123, 223, 323, 423, 523, 623) est adapté de façon à recevoir un signal de référence destiné à commander la phase de la sortie d'au moins un desdits onduleurs respectifs (123, 223, 323, 423, 523, 623),
(viii) où la sortie d'au moins un desdits redresseurs (121, 221, 321, 421, 521, 621) est inférieure à 1000 V c.c.
(ix) où la sortie d'au moins un desdits onduleurs (123, 223, 323, 423, 523, 623) est inférieure à 1000 V c.a.,
(x) comprenant en outre un transformateur (131, 331) destiné à transformer la sortie c.a. d'au moins un desdits onduleurs (123, 323) en une tension c.a. plus élevée,
(xi) où une pluralité desdits éléments générateurs de champ magnétique (107, 207, 307, 407) sont des aimants permanents (107, 207, 307, 407),
(xii) où le générateur est adapté de façon à être entraîné par un écoulement d'air,
(xiv) comprenant en outre un blindage (115, 215, 315, 415) adapté de façon à réduire la pénétration du flux magnétique provenant du générateur (101, 201, 301, 401) dans l'environnement externe, où une pluralité desdites unités de conditionnement de courant électrique (129, 229, 329, 429) sont localisées sur le côté opposé dudit blindage (115, 215, 315, 415) par rapport auxdits éléments générateurs de champ magnétique (107, 207, 307, 407), ou
(xv) où ledit au moins un desdits onduleurs (323, 423) est logé dans un boîtier étanche.

7. Générateur électrique (101, 201, 301, 401, 501, 601) selon l'une quelconque des Revendications précédentes, où au moins un dudit groupe d'enroulements (109, 209, 309, 409, 509, 609) comprend au moins un ensemble respectif (113, 213, 313) de n enroulements (109, 209, 309, 409, 509, 609) adaptés de façon à générer n phases différentes de courant électrique.

8. Générateur électrique (101, 201, 301, 401) selon la Revendication 7, où les enroulements (109, 209, 309, 409) dudit ensemble (113, 213, 313, 413) de n enroulements sont placés de manière adjacente les uns aux autres.

9. Générateur électrique (501) selon la Revendication 7 ou 8, où au moins un dudit groupe d'enroulements (509) comprend des ensembles multiples respectifs (513) de n enroulements adaptés de façon à générer n phases différentes de courant électrique, où les phases correspondantes de chaque ensemble (513) sont raccordées en série.

10. Générateur électrique (101, 201, 301, 401, 501, 601) selon la Revendication 7 ou 9, où au moins un dudit groupe d'enroulements (109, 209, 309, 409, 509, 609) comprend au moins un ensemble respectif (113, 213, 313, 413, 513, 613) de trois enroulements (109, 209, 309, 409, 509, 609) adaptés de façon à générer du courant électrique triphasé.

11. Générateur électrique selon l'une quelconque des Revendications précédentes, où ledit générateur est un générateur linéaire.

12. Générateur électrique (101, 201, 301, 401) selon l'une quelconque des Revendications 1 à 10, où ledit générateur (101, 201, 301, 401) est un générateur à rotor périphérique (101, 201, 301, 401), comprenant au moins un rotor (103, 203, 303, 403) adapté de façon à être monté rotatif sur un stator (105, 205, 305, 405).

13. Générateur électrique (101, 201, 301, 401) selon la Revendication 12, où une pluralité desdites unités de conditionnement de courant électrique (129, 229, 329, 429) sont réparties circonférentiellement autour dudit stator (105, 205, 305, 405).

14. Matrice (135, 335, 535, 635, 735) de générateurs électriques, comprenant une pluralité de générateurs électriques interconnectés (101, 301, 501, 601, 701) selon l'une quelconque des Revendications précédentes, adaptés de façon à être raccordés au réseau électrique public.
